# EUROPEAN PATENT SPECIFICATION

(11) **EP 3 848 618 B1**
(45) Date of publication and mention of the grant of the patent: **12.04.2023**
(21) Application number: 20213807.9
(22) Date of filing: 14.12.2020
(51) Int. Cl.: D06F 39/08, D06F 58/04, D06F 58/20, D06F 37/26, A47L 15/42, F16J 15/10, F16J 15/06

(54) **ELASTIC GASKET AND HOME APPLIANCE**
ELASTISCHE DICHTUNG UND HAUSHALTSGERÄT
JOINT ÉLASTIQUE ET APPAREIL DOMESTIQUE

(30) Priority: 10.01.2020 CN 202020058889 U
(43) Date of publication of application: 14.07.2021
(73) Proprietor: BSH Hausgeräte GmbH, 81739 München (DE)
(72) Inventor: Guo, Guangtao, Nanjing (CN); Zhang, Qi, Nanjing, 210046 (CN); Zhu, Yuting, Nanjing, 210046 (CN)

(56) References cited:
- FR-A- 1 411 411
- GB-A- 2 000 234
- US-A1- 2005 055 889

## Description

The present invention relates to a home appliance including an elastic gasket.
In some structures where a hole fits a rod member, a seal between the hole and the rod member needs to be ensured. In an existing conventional method, a coaxiality between a hole and a pin is controlled as much as possible, and a sealing gasket is filled or glue is applied to a gap. For such sealing forms, there is a relatively high requirement for processing and fitting precision, thereby increasing manufacturing and assembly costs. Moreover, varying sealing members need to be designed for different fitting sizes, resulting in poor universality. In addition, the seal fails when radial fitting precision between the hole and the rod member exceeds the amount of seal interference between the sealing gasket and the hole and the rod member. For example, when the hole and the rod member are often in a vibrational state to cause a relative displacement, the seal fails. However, a special glue application device or a special tooling is required for the manner of applying glue to a gap, resulting in relatively high costs and adverse impact on the health of operators.
The publication US 2005/0055889 A1 discloses a roof flashing assembly for use on a sloped roof surface having an elongate projection extending substantially upwardly therefrom in skewed relation thereto, the projection having at least one side wall defining an external surface, the roof flashing assembly comprising:
a resilient, flexible, sleeve sized to fit over, and surround, the at least one side wall of the projection,; the sleeve having a base portion for location adjacent to the roof surface, an upstanding neck portion joined thereto and a passageway defined between the base portion and the neck portion for receiving the projection therethrough;
the neck portion having a proximal end adjacent to the base portion, a distal end opposite the proximal end, and bellows means disposed between the proximal and distal ends in substantially coaxial relation with the passageway; the bellows means permitting the sleeve to flex adaptively to accommodate for the skewed orientation of the projection relative to the sloped roof surface;
a resilient upper sealing means positionable adjacent to the distal end of the neck portion in surrounding relation with the projection for frictionally sealingly engaging the eternal surface of the projection;
a resilient lower sealing means positionable below the base portion in surrounding relationship with the projection for sealingly engaging the external surface of the projection, the lower sealing means being sized and configures to frictionally sealingly engaging the roof surface when urged in abutting relation therewith; and anchoring means for securing the sleeve and the sealing means to the sloped roof surface.
The publication FR 1 411 411 A discloses a sealing device for rotationally or translationally movable members, with a sealing element having a substantially L-shaped cross-section, wherein the sealing element is arranged in a groove, preferably having a trapezoidal cross-section, in such a way that the working pressure presses the said element against the members to be sealed, which makes it possible to obtain a good seal while limiting wear.

The publication GB 2 000 234 A discloses a sealing arrangement between two cylindrical bodies which can be moved relative to one another, the arrangement being of the type in which one of the bodies has a seat in which there is disposed a gasket ring of resilient material having in its relaxed condition a given clearance with respect to the sealing surface of the other body, at least one side of the gasket ring being at an angle with respect to the corresponding side of the seat in order to permit the gasket ring, under the action of the pressure of a fluid penetrating the free space between the two bodies on one side of the seat to rotate about its torsional axis to thereby engage against one of the two sides of the seat which serve as sealing surfaces wherein the radial cross-section of the gasket ring comprises a first portion extending along the sealing surface of the other body and at least one further portion extending in substantially radial manner from the first portion, and the point at which the torsional axis passes vertically through the cross-section is located in the first portion. An objective of the present invention is to provide an improved home appliance with an elastic gasket, to effectively seal a hole and a rod member passing through the hole.

The present invention relates to a home appliance, including a chamber surrounded by a wall, the wall being provided with a hole, a rod member extending through the hole into the chamber, where the rod member is integrally provided with or fixedly connected to a jacking portion extending radially outward, and an elastic gasket comprising a sleeve-shaped first sealing portion adapted to be sleeved on a rod member to form a seal with the rod member, and a second sealing portion gradually expanding radially outward from an axial end portion of the first sealing portion to form a horn shape to be adapted to sealingly contact a wall provided with a hole and cover the hole, the first sealing portion and the second sealing portion being integrally made of an elastic material is sleeved on the rod member, is axially located between the jacking portion and the wall, and is axially compressed by the jacking portion and the wall.

In some embodiments, an inner wall of the first sealing portion is provided with an annular seal ring protruding radially inward.

In some embodiments, the second sealing portion includes a curved lip expanding centrifugally.

In some embodiments, the lip of the second sealing portion of the gasket is tightly joined to the wall, a j oint position is away from the hole and is located on a radial outer side of the hole, and an end, axially opposite to the lip, of the gasket is joined to the jacking portion.

In some embodiments, the first sealing portion of the gasket is in interference fit with the rod member.

In some embodiments, the chamber includes a treatment liquid or a treatment gas.

In some embodiments, the home appliance includes an appliance configured to clean or dry laundry or tableware, such as a dishwasher, a washing machine, a dryer, or a laundry dryer. In such home appliance, the chamber may be a drum for receiving laundry or a cabinet for receiving tableware.

In the elastic gasket used in the present invention, a requirement for fitting precision between the hole and the rod member can be effectively reduced, the feasibility and reliability of a sealing function is improved, and universality is implemented for different axial assembly sizes between holes and rod members. Implementations are simple, costs are low, and the reliability is high.

The structure of the present invention and other inventive objectives and beneficial effects thereof will become more comprehensible from the description of the preferred embodiments with reference to the accompanying drawings.

The following accompanying drawings, as a part of the specification and provided to further understand the present invention, describe specific implementations of the present invention and are used to describe the principle of the present invention along with the specification, where:
FIG. 1 is a partial cross-sectional view of a home appliance; and
FIG. 2 is an axial cross-sectional view of an elastic gasket in FIG. 1.

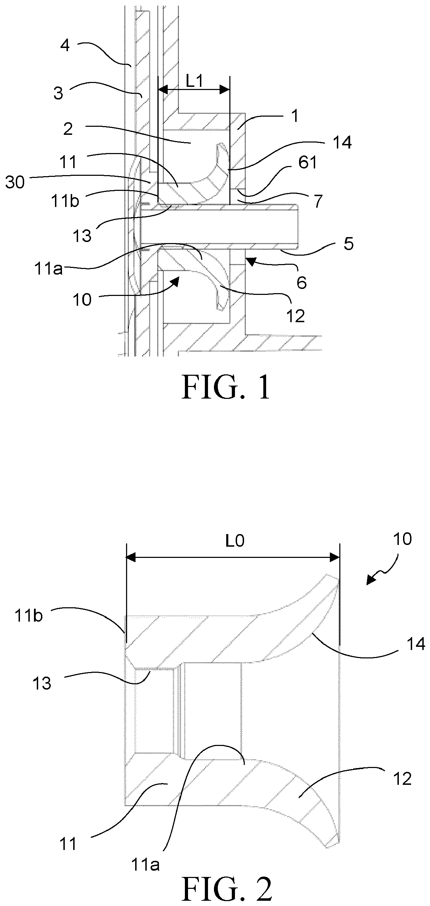

As shown in FIG. 1, a home appliance includes a chamber 2 surrounded by a wall 1. FIG. 1 shows only a part of the wall 1 and the chamber 2. The chamber 2 may receive a treatment liquid or a treatment gas. For example, when the home appliance is a dishwasher, the chamber 2 receives tableware and a liquid for washing the tableware or a high-temperature gas for drying the tableware. When the home appliance is a laundry treating appliance such as a washing machine, a dryer, or a laundry dryer, the chamber 2 receives laundry and a liquid for washing the laundry, a high-temperature gas for drying the laundry or a gas for performing a special care such as sterilization, wrinkle removal or odor removal on the laundry.

The chamber 2 includes a channel 4 defined by a channel wall 3. A hollow rod member 5 is connected to the channel wall 3, to supply a liquid to the channel 4 through the rod member 5. The wall 1 of the chamber 2 is provided with a hole 6 to allow the rod member 5 to extend through the hole 6 to the outside of the chamber 2. For ease of assembly, an inner diameter of the hole 6 is greater than an outer diameter of the rod member 5, to provide a gap 7 between a hole wall 61 and the rod member 5.

In other embodiments, the rod member may be a solid pin, pillar or shaft.

The gap 7 needs to be sealed, to prevent the treatment liquid or the treatment gas in the chamber 2 from diffusing outside through the gap 7. Based on this, the elastic gasket 10 is assembled to implement sealing.

With reference to FIG. 1 and FIG. 2, it can be learned that the elastic gasket 10 includes a sleeve-shaped first sealing portion 11 and a second sealing portion 12 gradually expanding radially outward from an axial first end portion 11a of the first sealing portion 11 to form a horn shape. The first sealing portion 11 and the second sealing portion 12 are integrally made of an elastic material such as rubber. An inner wall 110 of the first sealing portion 11 is provided with an annular seal ring 13 protruding radially inward. The second sealing portion 12 includes a curved lip 14 expanding centrifugally.

The elastic gasket 10 is sleeved on the rod member 5, and the first sealing portion 11 is in interference fit with the rod member 5. In the embodiments shown in the accompanying drawings, if the first sealing portion 11 is provided with an annular seal ring 13, the annular seal ring 13 is in interference fit with the rod member 5, so that a seal is implemented between the elastic gasket 10 and the rod member 5.

The second sealing portion 12 of the elastic gasket 10 faces the wall 1 of the chamber 2, is sealingly joined to the wall 1, and covers the hole 6. Specifically, it can be understood that the second sealing portion 12 is joined to the wall 1 on a radial outer side of the hole 6. To tightly press the second sealing portion 12 against the wall 1 to implement an elastic seal, a second end portion 1 1b of an end of the first sealing portion 11 opposite to the first end portion 11a abuts against the channel wall 3. The channel wall 3 forms a jacking portion (30) approaching the wall 1 of the chamber 2 to axially compress the elastic gasket 10, so that the gasket 10 is compressed from a free length L0 to a mounting length L1, where L1 < L0. Therefore, the lip 14 of the second sealing portion 12 is tightly joined to the wall 1, and a joint position is away from the hole 6 and is located on the radial outer side of the hole 6.

Therefore, the gap 7 between the hole wall 61 and the rod member 5 is isolated from the chamber 2 through a seal between the first sealing portion 11 of the elastic gasket 10 and the rod member 5 and a seal between the second sealing portion 12 and the wall 1 respectively, to prevent a gas or a liquid in the chamber 2 from overflowing.

In other embodiments, the jacking portion may be alternatively integrally disposed on a boss that is located on the rod member 5 and extends radially outward or may be an independent part fixed to an outer side of the rod member 5. The independent part is provided with a wall that extends radially outward like the channel wall 3, and may apply an axial force to the gasket 10.

## Claims

1. A home appliance, comprising a chamber (2) surrounded by a wall (1), the wall (1) being provided with a hole (6), a rod member (5) extending through the hole (6) into the chamber (2), **characterized in that** the rod member (5) is integrally provided with or fixedly connected to a jacking portion (30) extending radially outward, and an elastic gasket (10) comprising a sleeve-shaped first sealing portion (11) adapted to be sleeved on a rod member (5) to form a seal with the rod member (5), and a second sealing portion (12) gradually expanding radially outward from an axial end portion (11a) of the first sealing portion (11) to form a horn shape to be adapted to sealingly contact a wall (1) provided with a hole (6) and to cover the hole (6), the first sealing portion (11) and the second sealing portion (12) being integrally made of an elastic material is sleeved on the rod member (5), is axially located between the jacking portion (30) and the wall (1), and is axially compressed by the jacking portion (30) and the wall (1).

2. The home appliance according to claim 1, **characterized in that** the lip (14) of the second sealing portion (12) of the gasket (10) is tightly joined to the wall (1), a joint position is away from the hole (6) and is located on a radial outer side of the hole (6), and an end (11b), axially opposite to the lip (14), of the gasket (10) is joined to the jacking portion (30).

3. The home appliance according to claim 1, **characterized in that** the first sealing portion (11) of the gasket (10) is in interference fit with the rod member (5).

4. The home appliance according to claim 1, **characterized in that** the chamber (2) comprises a treatment liquid or a treatment gas.

5. The home appliance according to claim 4, **characterized in that** the home appliance comprises an appliance configured to clean or dry laundry or tableware.

6. The home appliance according to any of claims 1 to 5, wherein the elastic gasket (10) has an inner wall of the first sealing portion (11) which is provided with an annular seal ring (13) protruding radially inward.

7. The home appliance according to any of claims 1 to 6, wherein the second sealing portion (12) of the elastic gasket (10) comprises a curved lip (14) expanding centrifugally.

## Patentansprüche

1. Haushaltsgerät, das eine von einer Wand (1) umgebene Kammer (2) umfasst, wobei die Wand (1) mit einem Loch (6) versehen ist, wobei ein Stabelement (5) durch das Loch (6) hindurch in die Kammer (2) hinein verläuft, **dadurch gekennzeichnet, dass** das Stabelement (5) einstückig mit einem radial nach außen verlaufenden Pressabschnitt (30) und einer elastischen Dichtung (10) versehen oder fest damit verbunden ist, die einen hülsenförmigen ersten Dichtungsabschnitt (11) umfasst, der so ausgelegt ist, dass er auf ein Stabelement (5) aufgesteckt werden kann und so einen Verschluss damit bildet, und einen zweiten Dichtungsabschnitt (12) umfasst, der sich von einem axialen Endabschnitt (11a) des ersten Dichtungsabschnitts (11) aus radial nach außen hin allmählich aufweitet und so eine Trichterform bildet, die sich so anpassen kann, dass sie dicht an einer mit einem Loch (6) versehenen Wand (1) anliegt und das Loch (6) abdeckt, wobei der erste Dichtungsabschnitt (11) und der zweite Dichtungsabschnitt (12) einstückig aus einem elastischen Material hergestellt sind, die elastische Dichtung auf das Stabelement (5) aufgesteckt ist, sich axial zwischen dem Pressabschnitt (30) und der Wand (1) befindet und von dem Pressabschnitt (30) und der Wand (1) axial zusammengedrückt wird.

2. Haushaltsgerät nach Anspruch 1, **dadurch gekennzeichnet, dass** die Lippe (14) des zweiten Dichtungsabschnitts (12) der Dichtung (10) eng an die Wand (1) angefügt ist, eine Position der Fügestelle von dem Loch (6) entfernt liegt und sich auf einer radial außenliegenden Seite des Lochs (6) befindet und ein der Lippe (14) axial gegenüberliegendes Ende (11b) der Dichtung (10) an den Pressabschnitt (30) angefügt ist.

3. Haushaltsgerät nach Anspruch 1, **dadurch gekennzeichnet, dass** zwischen dem ersten Dichtungsabschnitt (11) der Dichtung (10) und dem Stabelement (5) eine Übermaßpassung besteht.

4. Haushaltsgerät nach Anspruch 1, **dadurch gekennzeichnet, dass** die Kammer (2) eine Behandlungsflüssigkeit oder ein Behandlungsgas umfasst.

5. Haushaltsgerät nach Anspruch 4, **dadurch gekennzeichnet, dass** das Haushaltsgerät ein Gerät umfasst, das so konfiguriert ist, dass es Wäsche oder Geschirr reinigt oder trocknet.

6. Haushaltsgerät nach einem der Ansprüche 1 bis 5, wobei bei der elastischen Dichtung (10) eine Innenwand des ersten Dichtungsabschnitts (11) mit einem ringförmigen Dichtungsring (13) versehen ist, der radial nach innen vorsteht.

7. Haushaltsgerät nach einem der Ansprüche 1 bis 6, wobei der zweite Dichtungsabschnitt (12) der elastischen Dichtung (10) eine gekrümmte Lippe (14) umfasst, die sich zentrifugal aufweitet.

## Revendications

1. Appareil ménager, comprenant une chambre (2) entourée par une paroi (1), la paroi (1) étant pourvue d'un orifice (6), un élément à tige (5) s'étendant à travers l'orifice (6) à l'intérieur de la chambre (2), **caractérisé en ce que** l'élément à tige (5) est intégralement doté d'une ou relié de manière fixe à une section de calage (30) s'étendant radialement vers l'extérieur, et un joint élastique (10) comprenant une première section d'étanchéité en forme de manchon (11) adaptée afin d'être emmanché sur un élément à tige (5) pour former un joint avec l'élément à tige (5), et une deuxième section d'étanchéité (12) à extension radiale graduelle vers l'extérieur au départ d'une partie terminale axiale (11a) de la première section d'étanchéité (11) pour constituer une forme de corne à adapter afin d'entrer en contact étanché avec une paroi (1) pourvue d'un orifice (6) et de couvrir l'orifice (6), la première section d'étanchéité (11) et la deuxième section d'étanchéité (12) étant intégralement réalisées en un matériau élastique est emmanché sur l'élément à tige (5), se situe axialement entre la section de calage (30) et la paroi (1), et est comprimée axialement par la partie de calage (30) et la paroi (1).

2. Appareil ménager selon la revendication 1, **caractérisé en ce que** la lèvre (14) de la deuxième section d'étanchéité (12) du joint (10) est fermement reliée à la paroi (1), une position commune se trouvant à l'écart de l'orifice (6) et étant située sur un côté extérieur radial de l'orifice (6), et une extrémité (11b) du joint (10) axialement opposée à la lèvre (14) est reliée à la section de calage (30).

3. Appareil ménager selon la revendication 1, **caractérisé en ce que** la première section d'étanchéité (11) du joint (10) se trouve en ajustement serré avec l'élément à tige (5).

4. Appareil ménager selon la revendication 1, **caractérisé en ce que** la chambre (2) comprend un liquide de traitement ou un gaz de traitement.

5. Appareil ménager selon la revendication 4, **caractérisé en ce que** l'appareil ménager comprend un appareil configuré afin de laver ou sécher du linge ou de la vaisselle.

6. Appareil ménager selon l'une quelconque des revendications 1 à 5, dans lequel le joint élastique (10) possède une paroi intérieure de première section d'étanchéité (11) pourvue d'une bague d'étanchéité annulaire (13) faisant saillie radialement vers l'intérieur.

7. Appareil ménager selon l'une quelconque des revendications 1 à 6, dans lequel la deuxième section d'étanchéité (12) du joint élastique (10) comprend une lèvre incurvée (14) s'étendant de façon centrifuge.
